**Europäisches Patentamt**

**European Patent Office**

**Office européen des brevets**

(19)

(11) Publication number : **0 396 487 B1**

# EUROPEAN PATENT SPECIFICATION

(12)

(45) Date of publication of patent specification :
**16.02.94 Bulletin 94/07**

(51) Int. Cl.⁵ : **A23L 1/325**

(21) Application number : **90500037.8**

(22) Date of filing : **10.04.90**

(54) Process for the manufacture of a product analogous to elver and product thus obtained.

(30) Priority : **28.04.89 ES 8901508**

(43) Date of publication of application :
**07.11.90 Bulletin 90/45**

(45) Publication of the grant of the patent :
**16.02.94 Bulletin 94/07**

(84) Designated Contracting States :
**BE DE DK FR GB GR IT NL SE**

(56) References cited :
**US-A- 4 579 741**
**PATENT ABSTRACTS OF JAPAN, vol. 9, no.**
**205 (C-299)[1928], 22nd August 1985; &**
**JP-A-60 75 259 (HAYASHIKANE SANGYO K.K.)**
**27-04-1985**

(56) References cited :
**PATENT ABSTRACTS OF JAPAN, vol. 10, no.**
**136 (C-347)[2193], 20th May 1986; & JP-A-60**
**259 162 (TAKASAGO KORYO KOGYO K.K.)**
**21-12-1985**
**PATENT ABSTRACTS OF JAPAN, vol. 7, no.**
**248 (C-193)[1393], 4th November 1983; & JP-**
**A-58 134 971 (AJIKAN K.K.) 11-08-1983**

(73) Proprietor : **ANGULAS AGUINAGA, S.A.**
**Casa "Irurak Bat"**
**E-20170 Aguinaga-Usurbil (Guipuzcoa) (ES)**

(72) Inventor : **Borderias Juarez, A. Javier**
**Avda. Valladolid, 47-C-2**
**E-28008 Madrid (ES)**
Inventor : **Tejada Yabar, Margarita**
**Avda. Valladolid, 47-C-2**
**E-28008 Madrid (ES)**
Inventor : **Montero Garcia, Pilar**
**Calle Cervantes 24**
**E-28014 Madrid (ES)**

(74) Representative : **Carpintero Lopez, Francisco**
**HERRERO & ASOCIADOS, S.L. Alcalá, 21**
**E-28014 Madrid (ES)**

EP 0 396 487 B1

## Description

### Field of the invention

The elver, a juvenile stage of the species <u>Anguilla anguilla</u> L, is a high-value product which is consumed mainly in Spain and, in lesser proportion, in some Mediterranean and Latin American countries. Furthermore, because of the ecological problem which heavy catching of this species in the juvenile stage causes, the quantity of elvers available is smaller each time so that, in order to satisfy the national market, elvers are imported from neighbouring countries in which, whether because of excessive catches or because of other causes, they are also disappearing. This causes the prices to be higher each time, giving rise to the fact that the elver producers devote themselves to selling the black-backed elver (an elver which is captured live, kept in ponds and, after processing, is sold refrigerated or frozen), the white elver, which was the more popular (it was not necessary to keep the white elver in ponds, since it died immediately after capture) and which supplied a large sector of consumers, having disappeared from the market.

The invention relates, therefore, to a process for the manufacture of a product analogous to the elver, and to the product analogous to the elver obtained by the said process.

### Prior art

A high percentage of surimi is used for the manufacture of analogues of various types of fish or shellfish, the Japanese word surimi being used internationally to define fish muscle which is comminuted, washed, drained until it contains a proportion of water similar to that in the original, has protein cryo-protectors added to it and is generally preserved in the frozen state. Surimi, which can be obtained from different species, serves as a base for the manufacture of various products which are traditionally sold in Japan, and of others which are also consumed in Western countries such as crab claws, prawns, scallops, lobsters, etc. All these products are developed by forming gels with distinct texture, form and flavour, as a function of the physico-chemical variations which are introduced into the myofibrillar fish protein which is the base of surimi (Okada, 1963, Lee, 1984; Borderías and Tejada, 1987; Tejada and Borderías, 1987). These modifications of the gel are obtained by applying different heat treatments, kneading times, atmospheric conditions in which the process takes place, etc., and/or by adding certain ingredients or additives which physically or chemically vary the texture of the protein network (Suzuki, 1981; Lee, 1984) or confer on it a characteristic aroma.

Nevertheless, not one specific process for obtaining a product analogous to the elver starting from surimi and/or comminuted fish is known, in spite of the fact that it is highly desirable to have such a product available, for the following reasons:
- The diversion of consumption towards the elver analogue would reduce the ecological problem which the heavy catching of natural elvers is causing at present.
- The lower cost of the manufactured product compared with the natural one would allow the demand from those sectors of the population which at present cannot be provided with elvers because of the price, to be satisfied.
- The starting material (surimi and/or comminuted fish) is plentiful on the market and is available throughout the year, as a result of which the problem of seasonality of catches is eliminated.
- Surimi is constituted of high-quality protein, but is extracted from under-utilized species, as a result of which the value of these species is reassessed when they are used in the form of surimi.

### Description of the invention

The subject of the invention is a food product analogous to the elver, characterized in that it has, in the gel state, the form of the natural elver, obtained by moulding or extrusion, and comprises surimi and/or comminuted fish with the myofibrillar protein solubilized by means of NaCl or KCl, preferably common salt, and additionally any of the following ingredients: starch, water, egg white, vegetable oil, natural colourings, antioxidants or flavouring additives.

There are different classes of surimi with distinct gel-forming characteristics, depending on the species from which they come, the freshness of the fish and the manufacturing and freezing conditions; because of this, the composition of the elver analogue will vary, both in the ingredients and in the percentages of the same.

It must in any case contain NaCl or KCl, but in order to show the texture and aroma conditions typical of the elver it should contain starch, water, egg white or other texture and flavour modifiers in order to obtain the proper characteristics; whether all or only some of these ingredients are used, and the proportion in which they are present, will depend on the quality of the surimi. Thus, for example, if the surimi used is first quality (SA grade) or second quality (1st grade) there will be less starch than if it is third quality (C grade). If the elasticity conditions are not the right ones, the product will contain more egg white; if, on the other hand, the gel is excessively dense, it will contain more water, as such or as a NaCl solution.

The process of obtaining the product described above is also a subject of the invention. This process is characterized in that the mass is subjected to an exhaustive comminution carried out at a temperature not greater than 15°C, from 2 to 5% by weight of NaCl is added and the mass is homogenized for a period which varies between 1 and 20 minutes, as a function of the type of surimi and/or comminuted fish used and of the temperature attained, until the mixture acquires a very pliable consistency, in addition to which are added, if necessary as a function of the conditions and characteristics of the starting comminuted fish or surimi, one or more of the following ingredients: starch, water, egg white, vegetable oil, natural colourings, cryo-protection additives, antioxidants or flavouring additives; the process then goes on to a second homogenization, for a period of 1 to 20 minutes and at a temperature of between 0° and 15°C, and to moulding or extrusion of the mass, to give it the form of the natural product, which operation is followed by a heat treatment which is sufficient to form and stabilize the gel and by a process of pasteurization or sterilization of the final product, in cases where it is considered necessary.

If the surimi is frozen it should previously be attempered to a temperature of between -5° and 15°C, preferably not greater than 3°C, after which it goes on to the comminution stage, for example in a cutter-type comminuter.

Depending on the characteristics of the surimi and/or comminuted fish, starch, egg white or vegetable oil will be added in greater or lesser proportions. The proportion of starch will vary between 0 and 15% by weight; that of egg white between 0 and 5% by weight and that of vegetable oil between 0 and 5% by weight,

Homogenization can take place in a vacuum, at atmospheric pressure or in an inert atmosphere, and at a temperature which varies between 0 and 15°C.

Once the characteristic form of the elver has been obtained by extrusion or moulding, the process continues with the formation and stabilization of the gel by subjecting the product to a temperature of 70° to 100°C, in a humid atmosphere, for the time required to stabilize the gel.

The heat treatment can also be carried out in two stages: the first at a temperature of 40° to 60°C until an intermediate or translucent gel is formed, and the second at a temperature of between 70° and 100°C for the time required for the formation of the final gel, carrying out both stages in a humid atmosphere (approximately 75% humidity in both stages or, alternatively, 50% humidity in the first stage and 75% humidity in the second stage).

The first stage will also consist in subjecting the product to dry heat of between 40° and 60°C, and the second stage in subjecting it to humid heat of between 70° and 100°C.

The optimum temperature for the single stage, or for the second stage in cases in which the treatment is carried out in two stages, is 90°C.

For shaping the elver it is convenient to use an extrusion or moulding machine designed for the purpose, connected to a continuous belt which allows subsequent heat treatment and packing.

In order that the invention can be better understood, two illustrative embodiments are given below:

Illustrative embodiments

Example 1

AA grade surimi (frozen for up to 6 months at -30°C) is used

| Percentage formula (w/w) | % |
|---|---|
| Surimi (AA grade) | 66 |
| Starch (preferably potato starch) | 4.5 |
| Dried egg white | 1.5 |
| Water | 28 |

- 4% of this weight is calculated and added as NaCl:
- Squid ink: solution of squid ink in water. The quantity necessary to obtain, in the final mass luminosity (L) and colour (a, b) characteristics, measured with a Hunter apparatus (Hunter, L, a, b), is added within the following ranges:

L = 63 - 52.5

a = -1.4 - 0.7

b = 4.3 - 0.8

where:

a = red (+) green (-)

b = yellow (+) blue (-)

## Manufacture of the product

- The surimi is attempered to a temperature which allows it to be handled (-4 to -1°C)
- It is triturated in a cutter-type comminuter under vacuum until it is possible to add the salt (NaCl) in a homogeneous form.
  time: approximately one hour.
- The salt is added and homogenization is continued under conditions of vacuum until the protein dissolves. time: 3 hours or until the temperature reaches 0 - 1°C.
- The rest of the ingredients are added and the mixture is homogenized.
  time: one hour or until the temperature reaches 6 - 8°C.
- Once the paste containing all the ingredients has been obtained it is given its final form by moulding or by extrusion. The form which is obtained is similar to that of the natural product, with the typical size variations.
- Afterwards the final gel is formed by means of a heat treatment in two stages:
  - translucent gel:   10 hours at 40°C in humid air (≈ 50% humidity)
  - final gel:   5 hours at 90°C in saturated steam.

If necessary, the product is subjected to pasteurization or sterilization under the conditions which are normal in this type of industry.

## Example 2

The percentage formula is varied as follows:
- In place of 66% surimi (AA) a mixture is added composed of:
  70% surimi (AA)
  30% eel muscle
- The process varies in that initially the eel muscle is comminuted and the different ingredients are added as in Example 1.

Fixation of the gel takes place in a single stage: 7 hours at 90°C in an atmosphere saturated with water vapour.

## Claims

1. Process for the manufacture of a food product analogous to the elver, from comminuted fish and/or surimi, characterized in that the mass is subjected to an exhaustive comminution carried out at a temperature not greater than 15°C, from 2 to 5% by weight of NaCl is added and the mass is homogenized for a period which varies between 1 and 20 minutes, as a function of the type of surimi and/or comminuted fish used and of the temperature attained, until the mixture acquires a very pliable consistency, in addition to which are added, if necessary as a function of the conditions and characteristics of the starting comminuted fish or surimi, one or more of the following ingredients: starch, water, egg white, vegetable oil, natural colourings, cryo-protection additives, antioxidants or flavouring additives; the process then goes on to a second homogenization, for a period of 1 to 20 minutes and at a temperature of between 0° and 15°C, and to moulding or extrusion of the mass, to give it the form of the natural product, which operation is followed by a heat treatment which is sufficient to form and stabilize the gel and by a process of pasteurization or sterilization of the final product, in cases where it is considered necessary.

2. Process according to the preceding claim, characterized in that up to 15% by weight of starch may be added.

3. Process according to Claim 1, characterized in that up to 5% by weight of egg white may be added.

4. Process according to Claim 1, characterized in that up to 5% by weight of vegetable oil may be added.

5. Process according to Claim 1, characterized in that homogenization is carried out in a vacuum.

6. Process according to Claim 1, characterized in that homogenization is carried out at atmospheric pressure.

7. Process according to Claim 1, characterized in that homogenization takes place in an inert atmosphere.

8. Process according to Claim 1 and one or more of Claims 2 to 7, characterized in that the heat treatment which follows moulding or extrusion consists in subjecting the product to a temperature of 70° to 100°C in a humid atmosphere, for the time required to stabilize the gel.

9. Process according to Claim 1 and one or more of Claims 2 to 7, characterized in that the heat treatment which follows moulding or extrusion consists in subjecting the product, in a first stage, to a temperature of 40° to 60°C, for the time required for the formation of an intermediate or translucent gel, and, in a second stage, to a temperature of between 70° and 100°C, for the time required for the formation of the final gel, in both cases in a humid atmosphere (approximately 75% humidity).

10. Process according to Claim 1 and one or more of Claims 2 to 7, characterized in that the heat treatment which follows moulding by extrusion consists in subjecting the product, in a first stage, to a temperature of 40°C to 60°C in an atmosphere with about 50% humidity for the time required for the formation of an intermediate or translucent gel, and, in a second stage, to a temperature of 70° to 100°C in an atmosphere with about 75% humidity, for the time required for the formation of the final gel.

11. Process according to Claim 1 and one or more of Claims 2 to 7, characterized in that the heat treatment which follows moulding or extrusion consists in subjecting the product, in a first stage, to dry heat of between 40° and 60°C, for the time required for the formation of an intermediate or translucent gel, and in a second stage to the temperature of 70° to 100°C in a humid atmosphere, for the time required for the formation of the final gel.

12. Food product analogous to the elver, characterized in that it has, in the gel state, the form of the natural product, obtained by moulding or extrusion, and comprises surimi and/or comminuted fish with the myofibrillar protein solubilized by means of NaCl or KCl, preferably common salt, and additionally any of the following ingredients: starch, water, egg white, vegetable oil, natural colourings, cryo-protection additives, antioxidants or flavouring additives, among which salt, starch, egg white and vegetable oil are present in the proportions expressed in Claims 1 to 4, wherein one or more of the additional ingredients and the percentages thereof, depend on the characteristics of the surimi or comminuted fish .

**Patentansprüche**

1. Verfahren zur Herstellung eines einem jungen Aal ähnlichen Produktes aus zermahlenem Fisch und/oder "surimi", dadurch gekennzeichnet dass die Masse bei einer Temperatur von bis zu 15ºC ausgiebig zermahlen wird, dass 2 oder 5% des Gesamtgewicht an NaCl hinzugegeben wird und die Masse über einen Zeitraum von 1 bis 20 Minuten homogenisiert wird, je nach Art des "surimi" und/oder zermahlenen Fisches, den man verwendet, und der Temperatur, die dabei erreicht wird, bis die Masse eine geschmeidige Konsistenz annimmt. Ausserdem werden, je nach dem Zustand und den Eigenschaften des zermahlenen Fisches oder "surimi" im Ausganszustand, eine oder mehrere der folgenden Zutaten hinzugefügt: Stärke, Wasser, Eiweiss, Pflanzenöl, natürliche Farbstoffe, Crioprotektion-Zusatzstoffe, Antioxidationsmittel oder Aromastoffe; das Verfahren wird dann mit einer 1 bis 20 Minuten lang dauernden zweiten Homogenisation bei einer Temperatur von 0 bis 15 º C, und dem Formen bzw. Extrusion der Masse fortgesetzt, bis sie die Form des Naturprodukts annimmt, wonach sie ausreichend mit Wärme behandelt wird, um ein Gel zu bilden und zu stabilisieren, wonach ein Pasteurisierungs- oder Sterilisierungverfahren des Endprodukts vorgenommen wird, wenn es notwendig erscheint.

2. Verfahren gemäss vorstehendem Patentanspruch, dadurch gekennzeichnet, dass bis zu 15 % Stärke am Gesamtgewicht hinzugefügt werden kann.

3. Verfahren gemäss Patentanspruch 1, dadurch gekennzeichnet, dass bis zu 5 % Eiweiss am Gesamtgewicht hinzugefügt werden kann.

4. Verfahren gemäss Patentanspruch 1, dadurch gekennzeichnet, dass bis zu 5 % Pflanzenöl am Gesamtgewicht hinzugefügt werden kann.

5. Verfahren gemäss Patentanspruch 1, dadurch gekennzeichnet, dass die Homogenisierung im Vakuum stattfindet.

6. Verfahren gemäss Patentanspruch 1, dadurch gekennzeichnet, dass die Homogenisierung unter Luftdruck stattfindet.

7. Verfahren gemäss Patentanspruch 1 dadudurch gekennzeichnet, dass die Homogenisierung in einer inerten Atmosphäre stattfindet.

8. Verfahren gemäss Patentanspruch 1 und einem oder mehrerer der Patentansprüche 2 bis 7, dadurch gekennzeichnet, dass die Wärmebehandlung, die dem Formen bzw. der Extrusion folgt, darin besteht, dass das Produkt solange Temperaturen zwischen 70 und 100ºC bei feuchter Atmosphäre ausgesetzt wird, bis sich das Gel stabilisiert.

9. Verfahren gemäss Patentanspruch 1 und einem oder mehrerer der Patentansprüche 2 bis 7, dadurch gekennzeichnet, dass die Wärmebehandlung, die dem Formen bzw. der Extrusion folgt, darin besteht, dass das Produkt in einem ersten Arbeitsgang solange Temperaturen zwischen 40 und 60ºC ausgesetzt wird, bis sich ein mittelmässig oder ganz durchsichtiges Gel gebildet hat, und in einem zweiten Arbeitsgang, solange Temperaturen zwischen 70 und 100ºC ausgesetzt wird, bis sich das Endgel bildet, in beiden Fällen bei feuchter Atmosphäre (mit einer Feuchtigkeit von circa 75%).

10. Verfahren gemäss Patentanspruch 1 und einem oder mehrerer der Patentansprüche 2 bis 7, dadurch gekennzeichnet, dass die Wärmebehandlung, die dem Formen bzw. der Extrusion folgt, darin besteht, das Produkt in einem ersten Arbeitsgang solange Temperaturen zwischen 40 und 60ºC bei einer Luftfeuchtigkeit von ca. 50% auszusetzen, bis sich ein mittelmässig oder ganz durchsichtiges Gel gebildet hat, und in einem zweiten Arbeitsgang, solange Temperaturen zwischen 70 und 100ºC bei einer Luftfeuchtigkeit von ca. 75% auszusetzen, bis sich das Endgel gebildet hat.

11. Verfahren gemäss Patentanspruch 1 und einem oder mehrerer der Patentansprüche 2 bis 7, dadurch gekennzeichnet, dass die Wärmebehandlung, die dem Formen bzw. der Extrusion folgt, darin besteht, das Produkt in einem ersten Arbeitsgang solange trockener Wärme bei 40 bis 60ºC auszusetzen, bis sich ein mittelmässig oder ganz durchsichtiges Gel gebildet hat, und in einem zweiten Arbeitsgang, solange Temperaturen zwischen 70 und 100ºC bei einer Luftfeuchtigkeit von 70 bis 100% ausgesetzt wird, bis sich das Endgel gebildet hat.

12. Ein einem jungen Aal ähnliches Produkt, dadurch gekennzeichnet, dass es in einem gelartigen Zustand, die Form des Naturproduktes annimmt, die durch Formen bzw. Extrusion erreicht wird, bestehend aus "surimi" und/oder zermahlenem Fisch mit durch NaCl oder KCl, vorzugsweise Kochsalz, gelöstem Muskelfaserprotein und ausserdem mit einer der folgenden Zutaten: Stärke, Wasser, Eiweiss, Pflanzenöl, natürliche Farbstoffe, Crioprotektion-Zusatzstoffe , Antioxidations- und Aromastoffe, von denen das Salz, die Stärke, das Eiweiss und das Pflanzenöl in den unter den Patentansprüchen 1 bis 4 bezeichneten Anteilen enthalten sind, und ausserdem dadurch gekennzeichnet, dass die Zugabe einer oder mehrerer Zutaten bzw. die Anteile derselben von den Eigenschaft des "surimi" oder zermahlenen Fisches abhängt.

**Revendications**

1. Procédé pour la fabrication d'un produit alimentaire analogue à la civelle à partir de poisson trituré et/ou de "surimi", caractérisé par le fait que la pâte est soumise à une trituration exhaustive réalisée à une température non supérieure à 15° C; on ajoute de 2 à 5 % en poids de NaCl et la pâte est homogénéisée pendant une période qui varie entre 1 et 20 minutes suivant le type de "surimi" et/ou de poisson utilisé et la température atteinte jusqu'à ce que le mélange ait acquis une consistance très flexible; à part cela, on ajoute en cas de besoin, suivant les conditions et les caractéristiques du poisson trituré ou du "surimi" de base, un ou plusieurs des ingrédients suivants : amidon, eau, blanc d'oeuf, huile végétale, colorants naturels, additifs de cryoprotection, antioxydants ou arômes; le procédé passe alors à une deuxième homogénéisation pendant une période de de 1 à 20 minutes à une température de 0 à 15° C et au moulage ou à l'extrusion de la pâte pour lui donner la forme du produit naturel, opération qui est suivie par un traitement thermique suffisant pour former et stabiliser le gel et par un processus de pasteurisation ou de stérilisation du produit final si cela est considéré nécessaire.

2.   Procédé suivant la revendication qui précède, caractérisé par le fait que l'on peut ajouter jusqu'à 15 % en poids d'amidon.

3.   Procédé suivant la revendication 1, caractérisé par le fait que l'on peut ajouter jusqu'à 5 % en poids de blanc d'oeuf.

4.   Procédé suivant la revendication 1, caractérisé par le fait que l'on peut ajouter jusqu'à 15 % en poids d'huile végétale.

5.   Procédé suivant la revendication 1, caractérisé par le fait que l'homogénéisation se réalise dans le vide.

6.   Procédé suivant la revendication 1, caractérisé par le fait que l'homogénéisation se déroule à la pression atmosphérique.

7.   Procédé suivant la revendication 1, caractérisé par le fait que l'homogénéisation se produit en atmosphère inerte.

8.   Procédé suivant la revendication 1 et une ou plusieurs des revendications de 2 à 7, caractérisé par le fait que le traitement thermique qui suit le moulage ou l'extrusion consiste à soumettre le produit à une température de 70° C à 100° C en atmosphère humide pendant le temps requis pour stabiliser le gel.

9.   Procédé suivant la revendication 1 et une ou plusieurs des revendications de 2 à 7, caractérisé par le fait que le traitement thermique qui suit le moulage ou l'extrusion consiste à soumettre le produit, en une première étape, à une température de 40° C à 60° C pendant le temps requis pour la formation d'un gel intermédiaire ou translucide et, en une deuxième étape, à une température de 70° C à 100° C pendant le temps nécessaire pour la formation du gel final, dans les deux cas en atmosphère humide (avec une humidité d'environ 75 %).

10.   Procédé suivant la revendication 1 et une ou plusieurs des revendications de 2 à 7, caractérisé par le fait que le traitement thermique qui suit le moulage ou l'extrusion consiste à soumettre le produit, en une première étape, à une température de 40° C à 60° C en une atmosphère ayant environ 50 % d'humidité pendant le temps nécessaire pour la formation d'un gel intermédiaire ou translucide et, en une deuxième étape, à une température de 70° C à 100° C en une atmosphère ayant à-peu-près 75 % d'humidité pendant le temps nécessaire pour la formation du gel final.

11.   Procédé suivant la revendication 1 et une ou plusieurs des revendications de 2 à 7, caractérisé par le fait que le traitement thermique qui suit le moulage ou l'extrusion consiste à soumettre le produit, en une première étape, à une chaleur sèche de 40° C à 60° C pendant le temps requis pour la formation d'un gel intermédiaire ou translucide et, en une deuxième étape, à une température de 70° C à 100° C en atmosphère humide pendant le temps nécessaire pour la formation du gel final.

12.   Produit alimentaire analogue aux civelles, caractérisé par le fait de présenter, à l'état de gel, la forme du produit naturel, obtenu par moulage ou extrusion et qui se compose de "surimi" et/ou de poisson trituré avec la protéine myofibrillaire solubilisée au moyen de NaCl ou de KCl, préférablement de sel commun, et, en outre, de quelques uns des ingrédients suivants : amidon, eau, blanc d'oeuf, huile végétale, colorants naturels, additifs pour la cryoprotection, antioxydants ou arômes, parmi lesquels le sel, l'amidon, le blanc d'oeuf et l'huile végétale se trouvent présents dans les proportions indiquées dans les revendications de 1 à 4 et par le fait qu'un ou plusieurs des ingrédients et les pourcentages de ceux-ci dépendent des caractéristiques du "surimi" ou poisson trituré.